# EUROPÄISCHE PATENTSCHRIFT

(11) **EP 1 897 743 B1**
(45) Veröffentlichungstag und Bekanntmachung des Hinweises auf die Patenterteilung: **22.07.2009**
(21) Anmeldenummer: 07115452.0
(22) Anmeldetag: 31.08.2007
(51) Int. Cl.: B60K 17/28, B60K 25/06

(54) **Landwirtschaftliches Fahrzeug und Verfahren zum Betreiben einer Zapfwellenbremse eines landwirtschaftlichen Fahrzeugs**
Agricultural vehicle and method for operating a power take-off brake for an agricultural vehicle
Véhicule agricole et procédé de fonctionnement d'un frein d'une prise de force d'un véhicule agricole

(30) Priorität: 08.09.2006 DE 102006042371
(43) Veröffentlichungstag der Anmeldung: 12.03.2008
(73) Patentinhaber: Deere & Company, Moline, IL 61265-8098 (US)
(72) Erfinder: Busch, Jochen, 74026, Dimbach (DE); Zahn, Klaus, 76684, Östringen (DE)
(74) Vertreter: Löser, Iris

(56) Entgegenhaltungen:
- EP-A- 0 952 027
- GB-A- 2 052 672
- GB-A- 2 277 358
- JP-A- 4 113 934
- US-A- 3 698 524

## Beschreibung

Die Erfindung betrifft ein landwirtschaftliches Fahrzeug mit einem Motor, einer Zapfwelle, welche elektronisch steuerbar in einen angetriebenen und in einen nicht angetriebenen Zustand schaltbar ist, einer elektronisch ansteuerbaren Zapfwellenbremse, wenigstens einem Sensor zur Erfassung der Geschwindigkeit des Fahrzeugs und einer elektronischen Steuereinheit zur Ansteuerung der Zapfwellenbremse. Ferner betrifft die Erfindung ein Verfahren zum Betreiben einer Zapfwellenbremse eines landwirtschaftlichen Fahrzeugs.

Landwirtschaftliche Fahrzeuge, wie z. B. Traktoren oder landwirtschaftliche Schlepper, die über ein Zapfwellengetriebe bzw. über eine Zapfwelle zum Antreiben von angebauten oder angehängten Arbeitsgeräten verfügen, sind üblicherweise mit Zapfwellenbremsen ausgerüstet, durch die ein unbeabsichtigtes Drehen der Zapfwelle, beispielsweise durch den Zapfwellenantrieb selbst oder durch das Arbeitsgerät, verhindert werden soll. So wird beispielsweise während des Stillstands des Fahrzeugs mit laufendem Motor und vorgewählter Zapfwellengeschwindigkeit die Zapfwelle ausgeschaltet, d.h. in einen nicht angetriebenen Zustand versetzt. Gleichzeitig wird die Zapfwellenbremse aktiviert. Wird nun die Zapfwelle wieder zugeschaltet, dann wird die Zapfwellenbremse wieder geöffnet bzw. deaktiviert.

Die EP 0 952 027 A, die den Oberbegriff des Anspruchs 1 bildet, offenbart ein Fahrzeug mit Zapfwellengetriebe, welches von einer Zapfwellenbremse blockiert wird, sobald das Zapfwellengetriebe ausgekuppelt ist. Es ist vorgesehen, dass die Zapfwellenbremse automatisch gelöst wird, wenn beispielsweise der Motor des Fahrzeugs gestoppt wird. Eine weitere vergleichbare Ausführung eines Fahrzeugs mit Zapfwelle und Zapfwellenbremse ist in GB 2 052 672 A offenbart.

Üblicherweise ist eine Zapfwellengeschwindigkeit vorgewählt. Zwar ist es möglich eine Neutralstellung für die Zapfwelle einzustellen bzw. die Zapfwellengeschwindigkeit auf "neutral" zu stellen, jedoch ist es oft der Fall, dass eine Bedienperson dies vergisst und somit die Zapfwellenbremse aktiviert wird, wenn die Bedienperson bei laufendem Motor das Fahrerhaus des Fahrzeugs verlässt, beispielsweise um ein Arbeitsgerät anzuhängen und mit der Zapfwelle zu verbinden. In diesem Fall ist das Einstecken der Zapfwelle beim Anhängen des Arbeitsgerätes meist nicht möglich, da ein manuelles Verdrehen der Zapfwelle bzw. eines Zapfwellenstummels, zum Einstellen einer geeigneten Einsteckstellung, bei aktivierter Zapfwellenbremse nicht möglich ist. Um die Zapfwelle einstecken zu können, muss die Bedienperson erst wieder im Fahrzeug die Zapfwellengeschwindigkeit auf "neutral" schalten, damit die Deaktivierung der Zapfwelle erfolgt. Dies kann sich als umständlich und unproduktiv gestalten, zumal die Anbaugeräte immer schwerer werden und das gesamte Handling zum Anhängen des Gerätes durch diesen Vorgang unterbrochen und damit gestört wird.

Die der Erfindung zugrunde liegende Aufgabe wird darin gesehen, ein landwirtschaftliches Fahrzeug der eingangs genannten Art zu schaffen, durch welches die vorgenannten Probleme überwunden werden.

Die Aufgabe wird erfindungsgemäß durch die Lehre des Patentanspruchs 1 und 5 gelöst. Weitere vorteilhafte Ausgestaltungen und Weiterbildungen der Erfindung gehen aus den Unteransprüchen hervor.

Erfindungsgemäß wird bei einem landwirtschaftlichen Fahrzeug der eingangs genannten Art eine elektronische Steuereinheit vorgesehen, die derart ausgebildet ist, dass bei Stillstand des Fahrzeugs bei laufendem Motor und nicht angetriebener Zapfwelle die Zapfwellenbremse deaktiviert wird, so dass die Zapfwelle im nicht angetriebenen Zustand sowie bei Stillstand des Fahrzeugs bei laufendem Motor manuell verdrehbar ist. Sobald nun eine Bedienperson bei Stillstand des Fahrzeugs und bei laufendem Motor das Fahrerhaus des Fahrzeugs verlässt, um ein Arbeitsgerät anzuhängen, wird die Zapfwellenbremse automatisch von der elektronischen Steuereinheit deaktiviert, wobei die elektronische Steuereinheit beispielsweise über einen Drehzahlsensor am Motor und über einen Drehzahlsensor am Antriebsstrang des Fahrzeugs erkennt, ob sich ein Stillstand des Fahrzeugs bei laufendem Motor ergeben hat. Entsprechende Steuersignale dieser oder auch anderer Sensoren, die einen derartigen Fahrzeugzustand erfassen bzw. detektieren, werden von der elektronischen Steuereinheit zur Generierung der entsprechenden Schaltsignale für die Zapfwellenbremse herangezogen.

Vorzugsweise ist ein weiterer Sensor vorgesehen welcher den Verdrehwinkel der Zapfwelle bei Stillstand des Fahrzeugs und nicht angetriebener Zapfwelle und deaktivierter Zapfwellenbremse erfasst, wobei die elektronische Steuereinheit derart ausgebildet ist, dass die Zapfwellenbremse aktiviert wird, wenn ein voreinstellbarer Wert für den Verdrehwinkel erreicht ist. Wird nun beispielsweise eine manuelle Verdrehung der Zapfwelle über einen bestimmten Verdrehwinkel hinaus vorgenommen, so wird dies als Fehlbedienung interpretiert und die Zapfwellenbremse wieder aktiviert. Dadurch wird verhindert, dass sich die Zapfwelle bei Stillstand des Fahrzeugs und vorzugsweise laufenden Motor über einen zulässigen Verdrehwinkel hinaus verdrehen kann und beispielsweise durch das Zapfwellengetriebe oder durch irgendeine Fehlschaltung am Fahrzeug oder aus irgendwelchen anderen nicht kontrollierten Gründen verdreht wird. Dieser zulässige Verdrehwinkel kann je nach Zapfwellenstummel bzw. Zähnezahl der Zapfwelle (z.B. 6 Zähne über den Umfang) frei gewählt werden. Beispielsweise würde ein manuelles Verdrehen der Zapfwelle über einen Verdrehwinkel von 60° bei 6 Zähnen über den Umfang genügen, um eine brauchbare Einsteckposition für die Zapfwelle bzw. für den Zapfwellenstummel erzielen zu können, wenn die Bedienperson das Anhängen eines Arbeitsgerätes mit Einstecken der Zapfwelle vornimmt.

In einer weiteren Ausführungsform kann vorgesehen sein, dass die elektronische Steuereinheit derart ausgebildet ist, dass nach Ablauf einer voreinstellbaren Zeit nach Deaktivierung der Zapfwelle die Zapfwellenbremse durch die elektronische Steuereinheit aktiviert wird. Dadurch wird gewährleistet, dass die Zapfwelle automatisch wieder blockiert werden würde, sobald eine vorgesehene Zeitspanne überschritten wird, so dass bei nicht beabsichtigtem Anhängen eines Arbeitsgerätes und bei Verlassen des Fahrzeugs durch die Bedienperson bei laufendem Motor die Sicherheitsfunktion gegeben ist, dass eine Deaktivierung der Zapfwellenbremse schon nach einer kurzen (voreinstellbaren) Zeitspanne aufgehoben und die Zapfwelle wieder aktiv durch die Zapfwellenbremse gebremst wird. Zum Betreiben des Arbeitsgerätes, nachdem das Anhängen bzw. der Anbau abgeschlossen und die Zapfwelle eingesteckt ist, kann vorgesehen werden, dass sobald die Zapfwelle von dem Fahrerhaus oder auch von einem außerhalb des Fahrerhauses angebrachten Schalters eingeschaltet wird, erst eine Zapfwellengeschwindigkeit mit einem weiteren im Fahrerhaus oder außerhalb des Fahrerhauses angeordneten Schalters ausgewählt werden muss.

Es kann ferner ein Sensor vorgesehen sein, der von einem Fahrer das Verlassen des Fahrerhauses signalisiert, wobei die elektronische Steuereinheit dann derart ausgebildet ist, dass eine Deaktivierung der Zapfwellenbremse in Abhängigkeit von diesem Sensor erfolgt und vorzugsweise eine Deaktivierung der Zapfwellenbremse von vornherein nicht erfolgt, wenn der Sensor signalisieren sollte, dass der Fahrer das Fahrerhaus nicht verlassen hat. Dies stellt eine Sicherheitsfunktion dar, so dass beispielsweise einer Fehlbedienung durch einen Fahrer im Fahrerhaus vorgebeugt wird, wenn beispielsweise Montierarbeiten im Bereich der Zapfwelle durch eine zweite Person erfolgen.

Ferner wird ein Verfahren vorgeschlagen. Das Verfahren betrifft das Betreiben einer Zapfwellenbremse eines landwirtschaftlichen Fahrzeugs mit einer Zapfwelle durch eine elektronische Steuereinheit. Das Verfahren umfasst die Schritte, dass die Zapfwellenbremse aktiviert wird, wenn dass Fahrzeug in Bewegung ist und die Zapfwelle in einem nicht angetriebenen Zustand ist, und dass die Zapfwellenbremse deaktiviert wird, wenn das Fahrzeug im Stillstand ist und die Zapfwelle in einem nicht angetriebenen Zustand ist. Vorzugsweise wird dies durch eine elektronische Steuereinheit umgesetzt und durchgeführt, die über entsprechende Sensoren, bezüglich Fahrzeuggeschwindigkeit, Motordrehzahl und Zapfwellendrehzahl, Informationen zur Generierung von entsprechenden Steuersignalen für die Zapfwellenbremse abgreift und diese zur Steuerung der Zapfwellenbremse bzw. zur Aktivierung und Deaktivierung heranzieht.

Es kann ein weiterer Verfahrensschritt vorgesehen sein, bei dem die die Zapfwellenbremse aktiviert wird, wenn bei Stillstand des Fahrzeugs und deaktivierter Zapfwellenbremse ein vorgebbarer Verdrehwinkel der Zapfwelle erreicht wird. Dies soll verhindern, dass es zur Fehlbedienung kommt oder die Zapfwelle unkontrolliert bzw. ungewollt in Drehung versetzt wird. So wird über einen bestimmten vorgebbaren Verdrehwinkel hinaus automatisch die Zapfwellenbremse aktiviert und die Zapfwelle wieder blockiert. In der Regel reicht es aus, dass die Zapfwelle nur über einen Bruchteil einer Umdrehung verdrehbar ist, um sie in ein Arbeitsgerät einzustecken bzw. anzuschließen. Es muss lediglich eine rotatorische Differenz zwischen den Zähnen der Zapfwelle und den Zahnlücken des Arbeitsgerätes überwunden werden, so dass die Zähne beim Einstecken mit denn Lücken fluchten. Dies ist bei einer Verzahnung von 6 Zähnen auf den Umfang mit einem maximalen Verdrehwinkel von 60° möglich. Bei einer höheren Anzahl würde der Verdrehwinkel sogar noch geringer ausfallen. Somit ist beispielsweise eine maximale Größe von 60° Verdrehwinkel an der Zapfwelle bei deaktivierter Zapfwelle und bei Stillstand des Fahrzeugs mit laufendem Motor in der Regel ausreichend.

Ferner kann ein weiterer Verfahrensschritt vorgesehen sein, bei dem die Zapfwellenbremse aktiviert wird, wenn bei Stillstand des Fahrzeugs und deaktivierter Zapfwellenbremse eine vorgebbare Zeit überschritten wird. Dies bewirkt eine Art Sicherheitsfunktion, bei der die Deaktivierung der Zapfwellenbremse nur für einen bestimmten, voreinstellbaren Zeitraum durchgeführt wird. Sobald dieser Zeitraum verstrichen ist, wird eine erneute Aktivierung der Zapfwellenbremse vorgenommen. Des Weiteren kann vorgesehen sein, dass sobald die Zapfwelle von dem Fahrerhaus oder auch von einem außerhalb des Fahrerhauses angebrachten Schalters eingeschaltet wird erst eine Zapfwellengeschwindigkeit vorgewählt werden muss, bevor das Arbeitsgerät in Betrieb genommen werden kann.

Es kann vorgesehen werden, dass die Zapfwellenbremse von vornherein nicht deaktiviert wird, wenn ein Sensor signalisiert, dass ein Fahrer das Fahrerhaus nicht verlassen hat. Dies stellt eine zusätzliche Sicherheitsfunktion dar, so dass gewährleistet ist, dass sich keine Person, weder Fahrer noch Helfer, im Fahrerhaus befinden, wenn Arbeiten, Einstellungen oder Montagen im Bereich der Zapfwelle stattfinden, so dass keine fehlerhaften Betätigungen von Schaltern oder Schaltmitteln aus dem Fahrerhaus heraus erfolgen können, die die Zapfwelle in Drehung versetzen könnten.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

### Es zeigt:

- Fig. 1: eine schematische Seitenansicht eines landwirtschaftlichen Fahrzeugs und
- Fig. 2: eine schematische Darstellung des Antriebs- und Zapfwellenstrangs des landwirtschaftlichen Fahrzeugs aus Fig. 1.

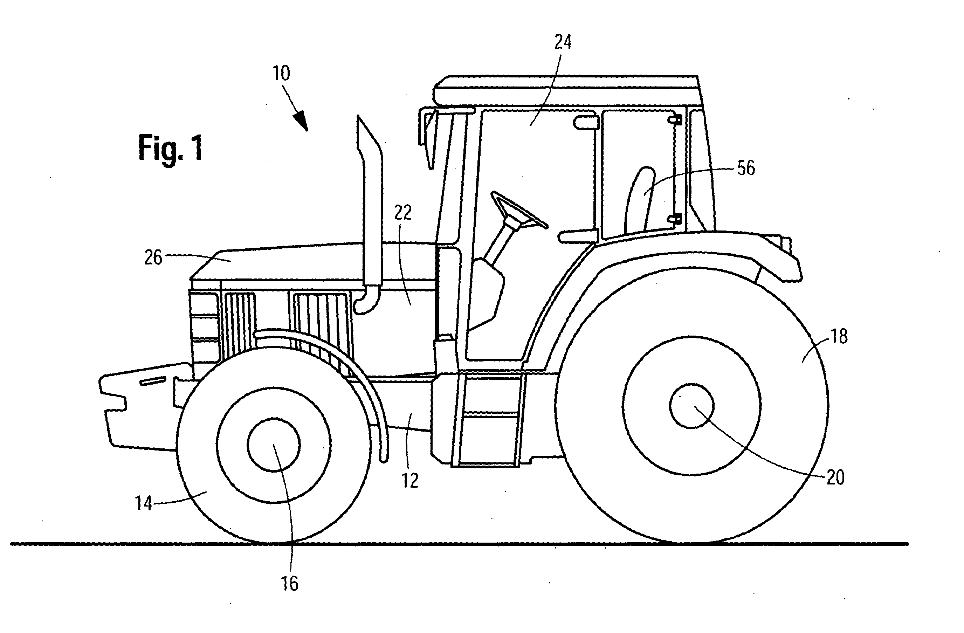

Figur 1 zeigt ein landwirtschaftliches Fahrzeug 10 in Form eines landwirtschaftlichen Schleppers oder Traktors. Das Fahrzeug 10 umfasst einen Rahmen 12, der von einer mit Vorderrädern 14 verbundenen Vorderachse 16 und von einer mit Hinterrädern 18 verbundenen Hinterachse 20 getragen wird. Das Fahrzeug 10 umfasst ferner eine auf dem Rahmen 12 aufgesetzte Karosserie 22 mit einem Fahrerhaus 24 und einer Motorhaube 26.

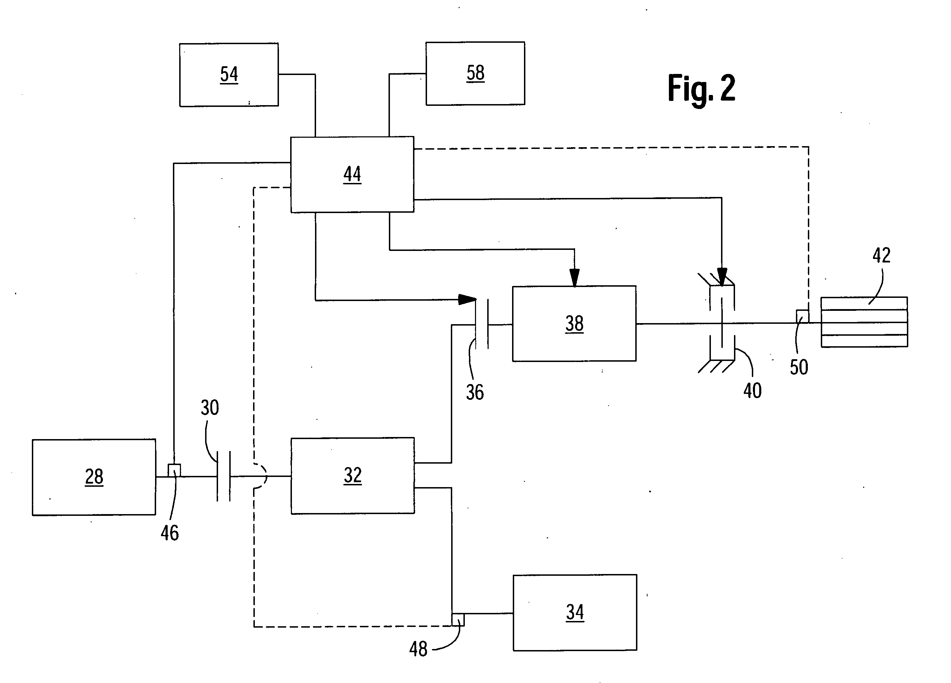

Das Fahrzeug 10 umfasst des Weiteren einen Antriebsmotor 28, eine Antriebskupplung 30, ein Getriebe 32, Antriebskomponenten 34, eine Zapfwellenkupplung 36 ein Zapfwellengetriebe 38, eine Zapfwellenbremse 40 und eine Zapfwelle 42, wie schematisch in Figur 2 dargestellt ist.

Die Antriebskupplung 30 ist vorzugsweise zwischen dem Getriebe 32 und dem Antriebsmotor 28 angeordnet. Vom Getriebe 32 zweigen stromabwärts des Antriebsflusses die Antriebskomponenten 34 ab, wobei Antriebswellen, Endgetriebe und andere Antriebskomponenten 34, die die Räder 14, 18 antreiben, hiermit benannt sein sollen und nicht näher dargestellt sind. Ferner zweigt vom Getriebe 32 der Zapfwellenstrang ab, der die Zapfwellenkupplung 36, das Zapfwellengetriebe 38, die Zapfwellenbremse 40 und die Zapfwelle 42 umfasst, wobei in dem dargestellten Ausführungsbeispiel die Zapfwellenkupplung 36 zwischen Getriebe 32 und Zapfwellengetriebe 38 und die Zapfwellenbremse 40 stromabwärts des Antriebsflusses hinter dem Zapfwellengetriebe 38, zwischen Zapfwellenbremse 38 und Zapfwelle 42, angeordnet ist. Ferner ist es auch möglich, das Zapfwellengetriebe 38 als integrierten Getriebezweig des Getriebes 32 auszubilden und/oder die Zapfwellenkupplung 36 stromabwärts des Antriebsflusses hinter dem Zapfwellengetriebe 38 anzuordnen, wobei dann die Zapfwellenbremse 40 zwischen Zapfwellenkupplung 36 und Zapfwelle 42 angeordnet ist.

Die Zapfwellenkupplung 36, das Zapfwellengetriebe 38 sowie die Zapfwellenbremse 40 sind über eine elektronische Steuereinheit 44 ansteuerbar. Alternativ kann die Zapfwellenkupplung 36 sowie das Zapfwellengetriebe 38 über gesonderte Schaltmittel bzw. Steuermittel, die im Fahrerhaus 24 angeordnet sind (nicht gezeigt), angesteuert werden.

Des Weiteren sind ein Drehzahlsensor 46 zur Ermittlung der Motordrehzahl, ein Geschwindigkeitssensor 48, sowie ein Drehzahlsensor 50 zur Ermittlung der Zapfwellendrehzahl angeordnet und mit der elektronischen Steuereinheit 44 zur Generierung von Steuersignalen verbunden.

Zur Generierung von Steuersignalen, wie zum Beispiel zum Zu- und Abschalten der Zapfwelle oder zum Vorwählen einer Zapfwellendrehzahl, sowie zur Vorgabe anderer steuerungsrelevanter Größen, sind Schalt- bzw. Steuermittel 54 vorgesehen, die von einer Bedienperson bzw. dem Fahrer des Fahrzeugs 10 bedienbar und im Fahrerhaus 24 angeordnet sind.

Die elektronische Steuereinheit 44 ist derart ausgebildet, dass sie die von den Sensoren 46, 48, 50 gelieferten Signale empfängt und zur Generierung von Steuersignalen für die Zapfwellenbremse 40 heranzieht. Ein in der elektronischen Steuereinheit 44 hinterlegter Steueralgorithmus ist derart programmiert, dass bei Stillstand des Fahrzeugs 10, d. h. wenn der Geschwindigkeitssensor 48 eine Geschwindigkeit von Null signalisiert, und bei laufendem Antriebsmotor 28, d. h. wenn der Drehzahlsensor 46 eine Drehzahl größer als Null signalisiert, die Zapfwellenbremse 40 geöffnet bzw. deaktiviert wird. Zusätzlich kann zur Generierung eines derartigen Steuersignals für die Zapfwellenbremse 40 auch noch das Signal eines an einem Fahrersitz 56 im Fahrerhaus 24 positionierten Sensors 58 herangezogen werden. Sollte der Sensor 58 signalisieren, dass sich ein Fahrer nicht vom Fahrersitz 56 erhoben hat, also vermutlich auch das Fahrerhaus nicht verlassen hat, so wird keine Deaktivierung der Zapfwellenbremse 40 vorgenommen. Der Sensor 58 kann beispielsweise als einfacher Kontaktschalter oder Kontaktsensor, sowie als Drucksensor oder auch als Lichtschranke ausgebildet sein.

Das Betreiben der elektronischen Steuerung 44 in Verbindung mit der Zapfwellenbremse 40 bzw. das Verfahren zum Betreiben der Zapfwellenbremse des landwirtschaftlichen Fahrzeugs 10 sieht vor, dass die Zapfwellenbremse 40 aktiviert ist, wenn dass Fahrzeug 10 in Bewegung ist und die Zapfwelle 42 in einem nicht angetriebenen Zustand ist. Ferner ist die elektronische Steuerung derart programmiert bzw. ausgebildet, dass Steuersignale für die Zapfwellenbremse 40 generiert werden, die veranlassen, dass die Zapfwellenbremse 40 deaktiviert wird, wenn das Fahrzeug 10 im Stillstand und die Zapfwelle 42 in einem nicht angetriebenen Zustand ist. Ein nicht angetriebener Zustand der Zapfwelle 42 wird dabei von der elektronischen Steuereinheit 44 insofern erkannt, als dass sie die Steuerung der Zapfwellenkupplung 36 selbst vornimmt und ein entsprechendes Antwortsignal von der Zapfwellenkupplung 36 selbst oder von einem Kupplungssensor (nicht gezeigt) empfängt. Das entsprechende Antwortsignal bzw. das Kupplungssensorsignal wird dabei bei der Generierung von Steuersignalen für die Zapfwellenbremse 40 berücksichtigt. Der Fahrer hat nun bei deaktivierter Zapfwellenbremse 40 die Möglichkeit die Zapfwelle zu verdrehen und in eine entsprechend mit einem Arbeitsgeräteanschluss fluchtende Position zu bringen, wobei vorgesehen ist, dass die Zapfwelle nur im Bereich eines voreinstellbaren Verdrehwinkels verdrehbar ist. Der Verdrehwinkel sollte jedoch ausreichen, um die nötigen Montierarbeiten bzw. Kuppel-, Einsteck- oder Anschlussarbeiten durchführen zu können. Der Verdrehwinkel wird vorzugsweise durch den Drehzahlsensor 50 erfasst. Alternativ kann jedoch ein weiterer Sensor (nicht gezeigt) vorgesehen sein, der eine höhere Auflösung bietet und innerhalb einer Umdrehung den genauen Verdrehwinkel der Zapfwelle 42 erfasst. Sobald ein voreingestellter Verdrehwinkel überschritten wird, wird die Zapfwellenbremse 40 wieder aktiviert, um einer Fehlbedienung vorzubeugen. Hierbei ist es auch möglich auf diese Begrenzung zu verzichten. Die Voreinstellung des Verdrehwinkels kann beispielsweise über die Schalt- bzw. Steuermittel 54 erfolgen, die in dem Fahrerhaus 24 angeordnet sind. Sie kann jedoch beispielsweise auch direkt an der elektronischen Steuereinheit 44 vorgenommen werden.

In einem Ausführungsbeispiel ist es vorgesehen, dass die Deaktivierung der Zapfwellenbremse 40 nur innerhalb einer vorgebbaren Zeitspanne erfolgt, so dass der Fahrer innerhalb dieser Zeitspanne reagiert haben muss und ein manuelles Verdrehen der Zapfwelle durchgeführt sein muss. Die elektronische Steuereinheit ist hierbei so programmiert bzw. ausgebildet, dass eine Aktivierung der Zapfwellenbremse 40 erfolgt, sobald diese Zeitspanne überschritten wurde. Die Voreinstellung dieser Zeitspanne kann beispielsweise ebenfalls über die Schalt- bzw. Steuermittel 54 erfolgen, die in dem Fahrerhaus 24 angeordnet sind. Sie kann jedoch beispielsweise auch direkt an der elektronischen Steuereinheit 44 vorgenommen werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Landwirtschaftliches Fahrzeug mit einem Motor (28), einer Zapfwelle (42), welche elektronisch steuerbar in einen angetriebenen und in einen nicht angetriebenen Zustand schaltbar ist, einer elektronisch ansteuerbaren Zapfwellenbremse (40), wenigstens einem Sensor (48) zur Erfassung der Geschwindigkeit des Fahrzeugs (10) und einer elektronischen Steuereinheit (44) zur Ansteuerung der Zapfwellenbremse (40), **dadurch gekennzeichnet, dass** die elektronische Steuereinheit (44) derart ausgebildet ist, dass bei Stillstand des Fahrzeugs (10) bei laufendem Motor (28) und nicht angetriebener Zapfwelle (42) die Zapfwellenbremse (40) deaktiviert wird, so dass die Zapfwelle (42) im nicht angetriebenen Zustand sowie bei Stillstand des Fahrzeugs (10) bei laufendem Motor manuell verdrehbar ist.

2. Landwirtschaftliches Fahrzeug nach Anspruch 1, **dadurch gekennzeichnet, dass** ein Sensor (50) vorgesehen ist, welcher den Verdrehwinkel der Zapfwelle (42) bei Stillstand des Fahrzeugs (10) bei laufendem Motor (28) und nicht angetriebener Zapfwelle (42) und deaktivierter Zapfwellenbremse (40) erfasst, wobei die elektronische Steuereinheit (44) derart ausgebildet ist, dass die Zapfwellenbremse (44) aktiviert wird, wenn ein voreinstellbarer Wert für den Verdrehwinkel erreicht ist.

3. Landwirtschaftliches Fahrzeug nach Anspruch 1 oder 2,
**dadurch gekennzeichnet, dass** die elektronische Steuereinheit (44) derart ausgebildet ist, dass nach Ablauf einer voreinstellbaren Zeit nach Deaktivierung der Zapfwelle (42) die Zapfwellenbremse (40) durch die elektronische Steuereinheit (44) aktiviert wird.

4. Landwirtschaftliches Fahrzeug nach einem der Ansprüche 1 bis 3, **dadurch gekennzeichnet, dass** ein Sensor (58) vorgesehen ist, der von einem Fahrer das Verlassen des Fahrerhauses (24) signalisiert, wobei die elektronische Steuereinheit derart ausgebildet ist, dass eine Deaktivierung der Zapfwellenbremse (40) in Abhängigkeit von diesem Sensor (58) erfolgt.

5. Verfahren zum Betreiben einer Zapfwellenbremse (40) eines landwirtschaftlichen Fahrzeugs (10) mit einem Motor (28) und einer Zapfwelle (42) durch eine elektronische Steuereinheit (44), **dadurch gekennzeichnet, dass** die Zapfwellenbremse (40) aktiviert wird, wenn das Fahrzeug (10) in Bewegung ist und die Zapfwelle (42) in einem nicht angetriebenen Zustand ist, und dass die Zapfwellenbremse (40) deaktiviert wird, wenn das Fahrzeug (10) im Stillstand bei laufendem Motor (28) ist und die Zapfwelle (42) in einem nicht angetriebenen Zustand ist.

6. Verfahren nach Anspruch 5, **dadurch gekennzeichnet, dass** die Zapfwellenbremse (40) aktiviert wird, wenn bei Stillstand des Fahrzeugs (10) bei laufendem Motor (28) und deaktivierter Zapfwellenbremse (40) ein vorgebbarer Verdrehwinkel der Zapfwelle (42) erreicht wird.

7. Verfahren nach Anspruch 5 oder 6, **dadurch gekennzeichnet, dass** die Zapfwellenbremse (40) aktiviert wird, wenn bei Stillstand des Fahrzeugs (10) bei laufendem Motor (28) und deaktivierter Zapfwellenbremse (40) eine vorgebbare Zeit überschritten wird.

8. Verfahren nach Anspruch 5, **dadurch gekennzeichnet, dass** die Zapfwellenbremse (40) nicht deaktiviert wird, wenn ein Sensor (58) signalisiert, dass ein Fahrer das Fahrerhaus (24) nicht verlassen hat.

## Claims

1. Agricultural vehicle having an engine (28), a power take-off (42) which can be switched under electronic control into a driven state and into a non-driven state, an electronically actuable power take-off brake (40), at least one sensor (48) for sensing the velocity of the vehicle (10) and an electronic control unit (44) for actuating the power take-off brake (40), **characterized in that** the electronic control unit (44) is embodied in such a way that when the vehicle (10) is stationary while the engine (28) is running and the power take-off (42) is not being driven the power take-off brake (40) is deactivated so that the power take-off (42) can be rotated manually in the non-driven state and when the vehicle (10) is stationary while the engine is running.

2. Agricultural vehicle according to claim 1, **characterized in that** a sensor (50) is provided which senses the rotational angle of the power take-off (42) when the vehicle (10) is stationary while the engine (28) is running and the power take-off (42) is not being driven and the power take-off brake (40) is deactivated, wherein the electronic control unit (44) is embodied in such a way that the power take-off brake (40) is activated if a presettable value for the rotational angle is reached.

3. Agricultural vehicle according to Claim 1 or 2, **characterized in that** the electronic control unit (44) is embodied in such a way that after a presettable time after deactivation of the power take-off (42) has expired, the power take-off brake (40) is activated by the electronic control unit (44).

4. Agricultural vehicle according to one of Claims 1 to 3, **characterized in that** a sensor (58) is provided which signals when a driver leaves the driver's cab (24), wherein the electronic control unit is embodied in such a way that the power take-off brake (40) is deactivated as a function of the sensor (58).

5. Method for operating a power take-off brake (40) of an agricultural vehicle (10), having an engine (28) and a power take-off (42), by means of an electronic control unit (44), **characterized in that** the power take-off brake (40) is activated if the vehicle (10) is moving and the power take-off (42) is in a non-driven state, and **in that** the power take-off brake (40) is deactivated if the vehicle (10) is in the stationary state while the engine (28) is running and the power take-off (42) is in a non-driven state.

6. Method according to Claim 5, **characterized in that** the power take-off brake (40) is activated if a predefinable rotational angle of the power take-off (42) is reached when the vehicle (10) is in the stationary state while the engine (28) is running and the power take-off brake (40) is deactivated.

7. Method according to Claim 5 or 6, **characterized in that** the power take-off brake (40) is activated if a predefinable time is exceeded when the vehicle (10) is in the stationary state while the engine (28) is running and the power take-off brake (40) is deactivated.

8. Method according to Claim 5, **characterized in that** the power take-off brake (40) is not deactivated if a sensor (58) signals that a driver has not left the driver's cab (24).

## Revendications

1. Véhicule agricole comprenant un moteur (28), une prise de force (42) qui peut être commutée par une commande électronique dans un état entraîné et dans un état non entraîné, un frein de prise de force (40) pouvant être commandé électroniquement, au moins un capteur (48) pour détecter la vitesse du véhicule (10) et une unité de commande électronique (44) pour commander le frein de prise de force (40), **caractérisé en ce que** l'unité de commande électronique (44) est réalisée de telle sorte qu'à l'arrêt du véhicule (10), lorsque le moteur (28) tourne et que la prise de force (42) n'est pas entraînée, le frein de prise de force (40) soit désactivé, de sorte que la prise de force (42) puisse être tournée manuellement dans l'état non entraîné et dans l'état arrêté du véhicule (10), lorsque le moteur tourne.

2. Véhicule agricole selon la revendication 1,
**caractérisé en ce qu'**il est prévu un capteur (50) qui détecte l'angle de rotation de la prise de force (42) à l'arrêt du véhicule (10) lorsque le moteur (28) tourne et que la prise de force (42) n'est pas entraînée et que le frein de prise de force (40) est désactivé, l'unité de commande électronique (44) étant réalisée de telle sorte que le frein de prise de force (40) soit activé lorsqu'une valeur préajustable pour l'angle de rotation est obtenue.

3. Véhicule agricole selon la revendication 1 ou 2, **caractérisé en ce que** l'unité de commande électronique (44) est réalisée de telle sorte qu'après le déroulement d'un temps préajustable, après la désactivation de la prise de force (42), le frein de prise de force (40) est activé par l'unité de commande électronique (44).

4. Véhicule agricole selon l'une quelconque des revendications 1 à 3, **caractérisé en ce qu'**un capteur (58) est prévu, lequel signale qu'un conducteur a quitté la cabine de conduite (24), l'unité de commande électronique étant réalisée de telle sorte qu'une désactivation du frein de prise de force (40) s'effectue en fonction de ce capteur (58).

5. Procédé pour faire fonctionner un frein de prise de force (40) d'un véhicule agricole (10) avec un moteur (28) et une prise de force (42), par une unité de commande électronique (44), **caractérisé en ce que** le frein de prise de force (40) est activé lorsque le véhicule (10) est en mouvement et que la prise de force (42) est dans un état non entraîné, et **en ce que** le frein de prise de force (40) est désactivé lorsque le véhicule (10) est à l'arrêt lorsque le moteur (28) tourne, et que la prise de force (42) est dans un état non entraîné.

6. Procédé selon la revendication 5, **caractérisé en ce que** le frein de prise de force (40) est activé lorsqu'un angle de rotation prédéfinissable de la prise de force (42) est atteint, à l'arrêt du véhicule (10) lorsque le moteur (28) tourne et que le frein de prise de force (40) est désactivé.

7. Procédé selon la revendication 5 ou 6, **caractérisé en ce que** le frein de prise de force (40) est activé lorsqu'un temps prédéfinissable est dépassé, à l'arrêt du véhicule (10) lorsque le moteur (28) tourne et que le frein de prise de force (40) est désactivé.

8. Procédé selon la revendication 5, **caractérisé en ce que** le frein de prise de force (40) n'est pas désactivé lorsqu'un capteur (58) signale qu'un conducteur n'a pas quitté la cabine de conduite (24).
